# EUROPÄISCHE PATENTANMELDUNG

(11) **EP 4 703 076 A1**
(43) Veröffentlichungstag der Anmeldung: **04.03.2026**
(21) Anmeldenummer: 25197849.0
(22) Anmeldetag: 25.08.2025
(51) Int. Cl.: B23D 57/00, B23D 59/00, B28D 1/10, B28D 7/00

(54) **SEILSÄGE UND VERFAHREN ZUM BETRIEB EINER SEILSÄGE**

(30) Priorität: 03.09.2024 EP 24198203
(71) Anmelder: Hilti Corporation, 9494 Schaan (LI)
(72) Erfinder: Rieger, Hans-Joerg, 6712 Thüringen (AT); Plattner, David, 6200 Gallzein (AT)
(74) Vertreter: Hilti Aktiengesellschaft Corporate Intellectual Property

(57) **Zusammenfassung**

Die vorliegende Erfindung betrifft eine Seilsäge (100) welche folgendes aufweist: einen Seilantrieb (102) zum Antrieb eines Sägeseils (104); eine Steuervorrichtung (110), welche ausgebildet ist zum: - Empfangen von Antriebs-Daten und Umlauf-Daten; - Ermitteln einer Antriebsgeschwindigkeit des Seilantriebs auf Grundlage der Antriebs-Daten und Ermitteln einer Umlaufgeschwindigkeit des Sägeseils (104) auf Grundlage der Umlauf-Daten; - Ermitteln einer Differenz aus Antriebsgeschwindigkeit und Umlaufgeschwindigkeit; - Ausgabe der Differenz an den Benutzer der Seilsäge und/oder Steuerung der Seilsäge auf Grundlage der Differenz.

## Beschreibung

Die vorliegende Erfindung betrifft eine Seilsäge und ein Verfahren zum Betrieb einer Seilsäge.

### Hintergrund der Erfindung:

Im Stand der Technik sind sogenannte Seilsägen bekannt, mit denen große Schnitte, beispielsweise in Wände, eingebracht werden können. Seilsägen verfügen üblicherweise über ein als Endlos-Sägeseil ausgebildetes Sägeseil, das im Inneren des Seilsägesystems über verschiedene Rollen geführt und gespannt wird. Zumindest ein Teil dieser Rollen bilden einen Seilspeicher, in dem das Sägeseil aufgenommen werden kann.

Diamantseilsägen werden in der Naturstein- und Bauindustrie für das Zerteilen von oft voluminösen Objekten verwendet. Bei diesen Objekten handelt es sich um Beton, Natur- oder Kunststein sowie auch Stahl- oder auch Verbund-Strukturen. Als Schneidwerkzeug werden mit superabrasivem Schneidbelag versehene Stahlkabel verwendet. Die für den Schnittvorgang benötigten Schnitt- und Vorschubkräfte werden mittels eines Seilantriebs sowie einer Seilspannvorrichtung der Seilsäge auf das Sägeseil übertragen.

Der Seilantrieb umfasst ein oder mehrere Antriebsräder. Die Kraftübertragung von Antriebsrad auf das Sägeseil erfolgt über Reibung. Zur Übertragung der für den Seilumlauf benötigten Kraft vom Antriebsrad auf das Sägeseil muss das Sägeseil gegen den Antriebsradbelag gedrückt werden. Durch das Andrücken erhöht sich die Reibung zwischen Antriebsradbelag und Sägeseil. Um das Sägeseil in Bewegung zu versetzen, muss die vom Antriebsrad auf das Sägeseil übertragene Kraft höher sein als der Widerstand, den das Sägeseil im Bauteil der Antriebskraft entgegensetzt. Ist die übertragene Kraft tiefer als der Widerstand am Bauteil, so kann es zum «Durchrutschen des Antriebsrads» kommen. Dieses Durchrutschen, auch als Schlupf bezeichnet, führt zu hohem Verschleiss des Antriebsrads.

Es kommt erschwerend hinzu, dass für den Anwender ein Durchrutschen eines Antriebsrads während des Betriebs der Seilsäge nur bedingt bzw. überhaupt nicht erkennbar ist. Dies bedeutet in der Praxis, dass Antriebsräder auf Grund hohen Verschleisses häufig erneuert werden müssen, was zu hohen Kosten und ungewollten Arbeitsunterbrechungen führt.

Auf Grundlage der oben genannten Problemstellung ist es eine Aufgabe der vorliegenden Erfindung, eine Seilsäge bzw. ein Verfahren zum Betrieb einer Seilsäge anzugeben, welche die Anwendung der Seilsäge vereinfacht und insbesondere den Benutzer derart dabei unterstützt ein Durchrutschen des Antriebsrads zu verhindern.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

Dementsprechend betrifft die vorliegende Erfindung eine Seilsäge, welche folgendes aufweist:
- einen Seilantrieb (102) zum Antrieb eines Sägeseils;
- eine erste Sensorvorrichtung zur Erkennung von Antriebs-Daten, welche repräsentativ für die Antriebsgeschwindigkeit des Seilantriebs sind;
- eine zweite Sensorvorrichtung zur Erkennung von Umlauf-Daten, welche repräsentativ für die Umlaufgeschwindigkeit des Sägeseils sind;
- eine Steuervorrichtung (110), welche ausgebildet ist zum:
   - Empfangen der Antriebs-Daten und der Umlauf-Daten;
   - Ermitteln einer Antriebsgeschwindigkeit des Seilantriebs auf Grundlage der Antriebs-Daten und Ermitteln einer Umlaufgeschwindigkeit des Sägeseils auf Grundlage der Umlauf-Daten;
   - Ermitteln einer Differenz aus Antriebsgeschwindigkeit und Umlaufgeschwindigkeit;
   - Ausgabe der Differenz an den Benutzer der Seilsäge und/oder Steuerung der Seilsäge auf Grundlage der Differenz.

Die Vorteile der erfindungsgemäßen Lösung liegen auf der Hand. So kann der Nutzer der Seilsäge bei Vorliegen einer Differenz aus Antriebsgeschwindigkeit und Umlaufgeschwindigkeit direkt auf ein Durchrutschen des Sägeseils schließen. Insbesondere wird bei normalem Betrieb der Seilsäge keine oder nur sehr geringe Differenzen zwischen der Antriebsgeschwindigkeit und der Umlaufgeschwindigkeit erwartet. Bei der Antriebsgeschwindigkeit kann es sich insbesondere um die Bahngeschwindigkeit an der Seilauflagefläche mindestens eines Antriebsrads des Seilantriebs handeln. Sobald sich eine signifikante Geschwindigkeitsdifferenz ergibt, kann der Nutzer auf ein Durchrutschen des Sägeseils schließen und entsprechende Maßnahmen ergreifen.

Beispielsweise kann der Nutzer zunächst das Gehäuse der Seilsäge öffnen, um zu verifizieren, dass es zum Durchrutschen des Sägeseils kommt. Der Nutzer kann auch ermitteln, ob das Durchrutschen durch einen hohen Widerstand im Bauteil oder durch nicht optimale Sägeparameter verursacht wurde. Der Nutzer kann danach, oder auch gänzlich ohne Verifikation, versuchen die Einstellungen der Seilsäge zu ändern, z.B. die Spannkraft des Sägeseils zu erhöhen. Die erfindungsgemäße Seilsäge hilft dem Nutzer demnach dabei, Schlupf schnell zu erkennen und Gegenmaßnahmen einzuleiten. Alternativ oder zusätzlich kann auch die Steuervorrichtung dazu ausgebildet sein, Gegenmaßnahmen auf Grundlage der Differenz vorzunehmen. Beispielsweise kann die Steuervorrichtung Betriebsparameter der Seilsäge verändern, wenn die Differenz zu hoch wird, d.h. wenn die Differenz einen vorbestimmten Schwellwert überschreitet. Beispielsweise kann die Steuervorrichtung dazu ausgebildet sein, die Antriebsgeschwindigkeit und/oder eine Seilspannung automatisch auf Grundlage der Differenz zu verändern. Die Standzeit des Antriebsrads kann hierdurch signifikant erhöht werden.

Nach einer weiteren Ausführungsform ist die Steuervorrichtung dazu ausgebildet, ein Warnsignal zu erzeugen, wenn die Differenz einen Schlupf-Grenzwert überschreitet. Gemäß dieser Ausführungsvariante muss der Nutzer einerseits die Differenz nicht regelmäßig überprüfen. Vielmehr warnt die Steuervorrichtung den Nutzer automatisch, wenn eine zu hohe Differenz besteht und somit ein Durchrutschen des Sägeseils auftritt. Auch wird hierdurch die Nutzung der neuartigen Seilsäge vereinfacht. Der Nutzer muss nicht mehr selbst entscheiden, ob eine auftretende Geschwindigkeitsdifferenz signifikanten Schlupf/Durchrutschen erzeugt. Vielmehr überprüft die Steuervorrichtung die Differenz gegenüber einem Schlupf-Grenzwert, um signifikante Geschwindigkeitsdifferenzen zu identifizieren. Der Schlupf-Grenzwert kann herstellerseitig vorprogrammiert sein. Alternativ kann die Steuervorrichtung dazu ausgebildet sein, den Schlupf-Grenzwert auf Grundlage unterschiedlicher Seilsägen-Parameter zu ermitteln. Auch kann die Steuervorrichtung den Schlupf-Grenzwert durch Maschine-learning eigenständig anpassen.

Nach einer weiteren Ausführungsform ist die Steuervorrichtung dazu ausgebildet, den Seilantrieb zu deaktivieren, wenn die Differenz einen Notfall-Grenzwert überschreitet. Dies erhöht die Lebensdauer des Antriebsrads wesentlich, da ein Durchrutschen des Sägeseils aktiv durch die Seilsäge verhindert wird. Der Notfall-Grenzwert kann herstellerseitig vorprogrammiert sein. Der Notfall-Grenzwert kann höher als der Schlupf-Grenzwert sein. Alternativ ist der Notfall-Grenzwert gleich dem Schlup-Grenzwert. Der Notfall-Grenzwert kann ebenfalls durch den Nutzer eingestellt bzw. verändert werden.

Die Steuervorrichtung kann derart ausgebildet sein, zwei oder mehrere Notfall-Grenzwerte zu verwenden Insbesondere zu Anfang des Sägevorganges kann die Steuervorrichtung einen höheren Notfall-Grenzwert anwenden, denn hier sind häufig höhere Widerstände zu überwinden, um das Sägeseil zu bewegen. Die Steuervorrichtung kann somit zu Anfang des Sägevorganges eine höhere Differenz akzeptieren. Beispielsweise kann die Steuervorrichtung für eine erste Zeitspanne (bspw. 5 Minuten nach dem Start) die Differenz mit einem ersten, höheren Notfall-Grenzwert vergleichen. Erwartungsgemäß wird sich die Differenz anfangs automatisch vermindern, da durch den Sägevorgang zunächst die Oberflächen/Kanten des zu sägenden Objekts abgerundet werden. Nach Ablauf der ersten Zeitspanne kann die Steuervorrichtung demnach die akzeptable Geschwindigkeitsdifferenz vermindern. Das heißt, die Steuervorrichtung kann nach Ablauf der ersten Zeitspanne einen zweiten, niedrigeren Notfall-Grenzwert anwenden.

Nach einer weiteren Ausführungsform weist die erste Sensorvorrichtung und/oder die zweite Sensorvorrichtung einen magnetischen, optischen oder mechanischen Sensor zur Erfassung der Antriebs-Daten und/oder der Umlauf-Daten auf. Die Antriebs-Daten und die Umlauf-Daten können insbesondere kontaktlos erfasst und an die Steuervorrichtung übermittelt werden.

Nach einer weiteren Ausführungsform weist der Seilantrieb wenigstens ein Antriebsrad auf, wobei die Antriebs-Daten eine Drehzahl des wenigstens einen Antriebsrads umfassen. Die Steuervorrichtung kann dazu ausgebildet sein, auf Grundlage der Drehzahl des Antriebsrads die Bahngeschwindigkeit des Antriebsrads zu ermitteln. Insbesondere kann die Steuervorrichtung hierzu Zugriff auf den Radius des Antriebsrads haben, welcher beispielsweise in einem Datenspeicher der Seilsäge hinterlegt ist. Die Bahngeschwindigkeit entspricht der Antriebsgeschwindigkeit des Seilantriebs.

Nach einer weiteren Ausführungsform weist der Seilantrieb wenigstens einen Antriebsmotor auf, wobei die Antriebs-Daten einen Drehzahl-Sollwert zur Steuerung des Antriebsmotors umfasst. Gemäß dieser Ausführungsform ist eine Sensorvorrichtung zur Erfassung der Antriebs-Daten nicht unbedingt erforderlich. Vielmehr kann die Steuervorrichtung direkt mit der Motorsteuerung kommunizieren, um den Drehzahl-Sollwert zu ermitteln. Dieser kann durch die Steuervorrichtung wiederrum mit Hilfe des Radius des Antriebsrads in eine Soll-Bahngeschwindigkeit umgewandelt werden. Alternativ kann die Steuervorrichtung auch dazu ausgebildet sein, die Antriebsgeschwindigkeit auf Grundlage einer Strom-Frequenz des Motorsteuersignals zu ermitteln. Wie bereits erwähnt können die Antriebs-Daten auch jeden anderen Parameter umfassen, welcher zur Ermittlung der Antriebsgeschwindigkeit, insbesondere der Bahngeschwindigkeit der Antriebsräder, dient.

Nach einer weiteren Ausführungsform weist die Seilsäge einen Spannmechanismus zum Spannen eines Sägeseils auf, wobei die Steuervorrichtung dazu ausgebildet ist, eine auf das Sägeseil ausgeübte Spannkraft auf Grundlage der Differenz zu verändern. Gemäß dieser Ausführungsvariante kann die Steuervorrichtung automatisch auf eine zu hohe Geschwindigkeitsdifferenz, d.h. auf ein Durchrutschen des Sägeseils reagieren.

Nach einer weiteren Ausführungsform ist die Steuervorrichtung dazu ausgebildet, die auf das Sägeseil ausgeübte Spannkraft zu erhöhen, wenn die Antriebsgeschwindigkeit höher ist als die Umlaufgeschwindigkeit. Alternativ kann die Steuervorrichtung die Spannkraft erst dann erhöhen, wenn die Differenz einen Grenzwert überschreitet. Beispielsweise kann es sich bei dem Grenzwert um den oben bereits erwähnten Schlupf-Grenzwert handeln.

Nach einer weiteren Ausführungsform ist die Steuervorrichtung dazu ausgebildet, die auf das Sägeseil ausgeübte Spannkraft so lange zu erhöhen, bis die Differenz im Wesentlichen Null ist. Die Steuervorrichtung regelt die Seilsäge entsprechend derart, dass kein oder kein signifikantes Durchrutschen auftritt. Hierzu kann die Steuervorrichtung einen Regelkreis aufweisen, um die Differenz auf Null zu regeln.

Nach einer weiteren Ausführungsform weist die Seilsäge einen Sensor zur Erfassung von Spannkraft-Daten, welche repräsentativ für eine auf das Sägeseil ausgeübte Spannkraft sind, auf, wobei die Steuervorrichtung dazu ausgebildet ist die Spannkraft-Daten zu empfangen und eine auf das Sägeseil ausgeübte Spannkraft zu ermitteln, wobei die Steuervorrichtung dazu ausgebildet ist, die ermittelte Spannkraft mit einem Spannkraft-Grenzwert zu vergleichen und ein weiteres Spannen des Sägeseils zu verhindern oder den Benutzer zu informieren, wenn die ermittelte Spannkraft den Spannkraft-Grenzwert überschreitet. Die Steuervorrichtung dieser Ausführungsvariante verhindert ein übermäßiges Spannen des Sägeseils, unabhängig davon ob der Spannmechanismus durch den Nutzer oder die Steuervorrichtung gesteuert wird. Bei den Spannkraft-Daten kann es sich beispielsweise um einen Zylinderdruck (z.B. pneumatischer Zylinder) des Spannmechanismus handeln, um die auf das Seil ausgeübte Kraft zu bestimmen bzw. anzupassen. Insbesondere zu Anfang des Sägevorgangs ist es möglich, dass der Widerstand gegen eine Bewegung des Sägeseils hoch ist, da am zu sägenden Objekt scharfe Ecken und Kanten vorhanden sind, welche zunächst Durch das Sägeseil abgerundet werden müssen. Durch derartig hohe Widerstände kann es zu vermehrtem Durchrutschen des Sägeseils an den Antriebsrädern kommen. Die Steuervorrichtung oder der Nutzer versuchen ein derartiges Durchrutschen durch Erhöhen der Seilspannung zu verhindern. Dies ist jedoch nicht unbegrenzt möglich, da bei zu hoher Seilspannung das Risiko erhöht wird, dass das Sägeseil abreißt. Um ein derartiges Überspannen des Sägeseils zu verhindern, ist die Steuervorrichtung dazu ausgebildet die Spannkraft mit einem Spannkraft-Grenzwert zu vergleichen. Die Steuervorrichtung kann bei Überschreiten des Spannkraft-Grenzwerts den Benutzer informieren. Insbesondere kann diese den Benutzer darauf hinweisen, dass der Seilwiderstand womöglich zu hoch ist. Der Nutzer kann daraufhin Schritte unternehmen, wie bspw. die manuelle Rundung von Ecken und Kanten am Objekt.

Nach einer weiteren Ausführungsform weist die Seilsäge einen Bildschirm zur Anzeige der Differenz auf.

Nach einer weiteren Ausführungsform weist die Seilsäge ein Sägeseil auf, welches ein mit einem super-abrasiven Schneidbelag, insbesondere Diamant, belegtes Stahlkabel umfasst.

Ein weiterer Aspekt der vorliegenden Erfindung betrifft ein Verfahren zum Betrieb einer Seilsäge, wobei das Verfahren folgende Schritte aufweist:
- Empfangen von Antriebs-Daten, welche repräsentativ für die Antriebsgeschwindigkeit des Seilantriebs sind, und Umlauf-Daten, welche repräsentativ für die Umlaufgeschwindigkeit des Sägeseils sind;
- Ermitteln einer Antriebsgeschwindigkeit des Seilantriebs auf Grundlage der Antriebs-Daten und Ermitteln einer Umlaufgeschwindigkeit des Sägeseils auf Grundlage der Umlauf-Daten;
- Ermitteln einer Differenz aus Antriebsgeschwindigkeit und Umlaufgeschwindigkeit;
- Ausgabe der Differenz an den Benutzer der Seilsäge und/oder Steuerung der Seilsäge auf Grundlage der Differenz.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische, perspektivische Ansicht einer Ausführungsform einer Seilsäge gemäß der vorliegenden Erfindung;
- Fig. 2: vergrößerte Darstellung des Seilantriebs und des Seilspeichers der Seilsäge gemäß Fig. 1;
- Fig. 3: Ablaufdiagramm eines Verfahrens zum Betrieb einer Seilsäge gemäß einer Ausführungsform der vorliegenden Erfindung.

### Detaillierte Beschreibung

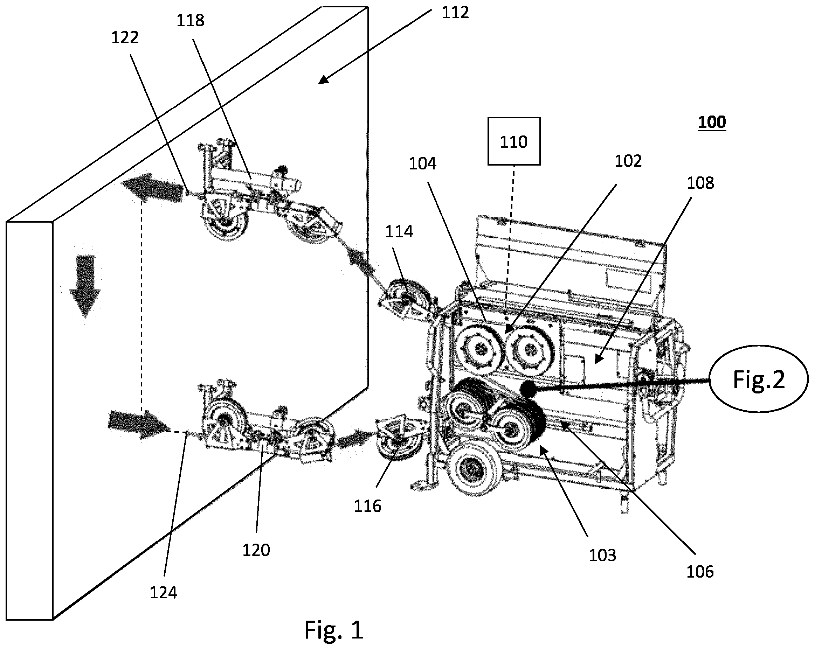

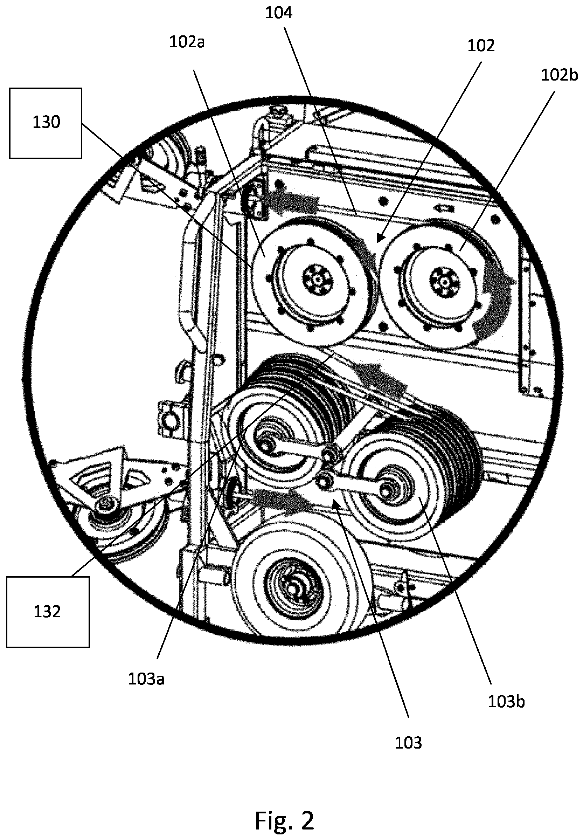

Figur 1 zeigt eine bevorzugte Ausgestaltung der vorgeschlagenen Seilsäge 100. Die Seilsäge 100 umfasst einen Seilantrieb 102 und einen Seilspeicher 103. Die Seilsäge 100 weist ein Gehäuse 108 auf, an welchem der Seilantrieb 102 und der Seilspeicher 103 angeordnet sind. Eine vergrößerte Darstellung des Seilantriebs 102 und des Seilspeichers 103 ist der Fig. 2 zu entnehmen.

Der Seilantrieb 102 weist zwei Antriebsräder 102a, 102b (Fig. 2) auf. Jedes der Antriebsräder 102a, 102b ist mit einem separaten Antriebsmotor verbunden. Die Antriebsmotoren befinden sich hinter der in den Figuren 1 und 2 gezeigten Ebene, das heißt hinter den Antriebsrädern 102a, 102b. Die Antriebsräder 102a, 102b dienen dazu ein Sägeseil 104 anzutreiben, um dieses gegenüber einem zu bearbeitenden Objekt, hier gegenüber einer Wand 112, zu bewegen.

Das Sägeseil 104 ist mit beiden Antriebsrädern 102a, 102b des Seilantriebs 102 im engen Kontakt. In der hier dargestellten Ausführungsvariante ist das Sägeseil 104 in einer S-Form um die beiden Antriebsräder 102a, 102b gewickelt. Hierdurch kann eine Rotation der Antriebsräder durch Reibung auf das Sägeseil 104 übertragen werden. Um die Übertragung der Rotation der Antriebsräder 102a, 102b auf das Sägeseil 104 zu verbessern, können die Antriebsräder 102a, 102b eine elastische Oberfläche (bspw. aus Gummi) aufweisen. Bei ausreichender Spannung kann das Sägeseil 104 dementsprechend teilweise in die elastische Oberfläche der Antriebsräder 102a, 102b eingedrückt werden, so dass im Wesentlichen ein Formschluss zwischen dem Sägeseil 104 und der elastischen Oberfläche der Antriebsräder 102a, 102b entsteht.

Der Seilspeicher 103 weist zwei Rollensätze 103a, 103b auf. Jeder Rollensatz 103a, 103b weist eine Vielzahl parallel zueinander angeordneter Rollen auf. Die parallelen Rollen sind auf einer gemeinsamen Achse angeordnet und bilden Speicherebenen des Seilspeichers 103 aus. In der hier dargestellten Position sind je zwei Rollen der beiden Rollensätze 103a, 103b mit dem Sägeseil 104 belegt. Mit anderen Worten, in der Position gemäß der Figuren 1 und 2 sind zwei der insgesamt vier dargestellten Speicherebnen des Seilspeichers 103 belegt. Der Seilspeicher 103 ist dazu eingerichtet, das Sägeseil 104 der Seilsäge 100 aufzunehmen und zu speichern.

Die Seilsäge 100 weist einen hier nur angedeuteten Spannmechanismus 106 zur Straffung des Sägeseils 104 auf. Der Spannmechanismus 106 ist mit wenigstens einem der Rollensätze 103a, 103b verbunden und dient dazu die Rollensätze relativ zueinander zu bewegen. Im hier dargestellten Beispiel handelt es sich bei dem Spannmechanismus 106 um einen pneumatischen Zylinder. Die Erfindung ist jedoch nicht auf die Art des Spannmechanismus beschränkt. Vielmehr kann dieser auch anderweitig ausgeführt sein, wie beispielsweise als federbelasteter, elektrischer, hydraulischer oder auch manuell betätigter Antrieb. Der Spannmechanismus 106 ist einerseits mit dem Gehäuse 108 und andererseits mit dem zweiten Rollensatz 103b verbunden. Der Spannmechanismus kann also dazu verwendet werden, den zweiten Rollensatz 103b gegenüber dem ersten Rollensatz 103a zu verschieben, um Seil aufzunehmen oder freizugeben.

Die Seilsäge 100 weist eine Steuervorrichtung 110 auf, die dazu verwendet werden kann den Seilantrieb 102 zu steuern, bspw. um den Vorschub des Sägeseils zu kontrollieren bzw. die Seilsäge ein- oder auszuschalten. Andererseits kann die Steuervorrichtung dazu verwendet werden, den Spannmechanismus 106 zu steuern, bspw. um die Seilspannung zu kontrollieren. Die Steuervorrichtung 110 kann am Gehäuse 108 der Seilsäge 100 angeordnet sein. Andererseits kann die Steuervorrichtung 110 auch als Fernsteuervorrichtung ausgebildet sein, welche drahtlos oder drahtgebunden mit einer Steuerelektronik der Seilsäge 100 verbunden ist.

Die Seilsäge 100 weist ferner Führungsrollen 114, 116 auf. Die Führungsrollen 114, 116 dienen dazu das Sägeseil 104 in Richtung der Antriebsrollen des Seilantriebs 102 beziehungsweise der Rollensätze des Seilspeichers 103 in das Gehäuse 108 der Seilsäge 100 hineinzuführen beziehungsweise eine Ablenkung des Sägeteils in jegliche Richtung außerhalb des Gehäuses 108 zu ermöglichen. Hierzu sind die Führungsrollen 114, 116 rotierbar und verschwenkbar am Gehäuse 108 der Seilsäge 100 angebracht.

Das Sägeseil 104 erstreckt sich von einer ersten Führungsrolle 114 der Seilsäge 100 zu einer ersten Seilführung 118. Die erste Seilführung 118 ist in diesem Beispiel temporär an der Wand befestigt und dient der Umlenkung des Sägeseils 104 von der Seilsäge 100 zum Schnitt über eine erste Bohrung 122 in der Wand 112. Das Sägeseil 104 verläuft hinter der Wand 112 zu einer zweiten Bohrung 124. Nach Durchlaufen der zweiten Bohrung 124, wird das Sägeseil über eine zweite Seilführung 120 auf die zweite Führungsrolle 116 der Seilsäge 100 umgelenkt. Auch die zweite Seilführung 120 ist temporär an der Wand 112 befestigt. Zwischen den Führungsrollen 114, 116 der Seilsäge und den jeweiligen Seilführungen 120, 122 können teleskopische Schutzrohre (nicht dargestellt) zur Abdeckung der freien Seillängen fixiert werden, um den Anwender vor Verletzungen am Sägeseil zu schützen.

Der Fig. 2 schematisch erste und zweite Sensorvorrichtungen 130, 132 zu entnehmen. Die erste Sensorvorrichtung 130 dient dazu Antriebs-Daten zu erfassen. Die Antriebs-Daten können sämtliche Parameter umfassen, die repräsentativ für eine Antriebsgeschwindigkeit (z.B. Bahngeschwindigkeit) des Seilantriebs ist. Die zweite Sensorvorrichtung 132 dient dazu Umlauf-Daten zu erfassen. Die Umlauf-Daten können sämtliche Parameter umfassen, die repräsentativ für eine Umlaufgeschwindigkeit des Seilantriebs ist. Beispielsweise können die erste und/oder die zweite Sensorvorrichtung 130, 132 magnetische Sensoren aufweisen, welche die Umlauf-Daten bzw. die Antriebs-Daten kontaktlos erfassen und an die Steuervorrichtung weiterleiten. Über das Sägeseil wird viel Schmutz (bspw. Schlammwasser) in die Seilsäge gefördert, sodass die Verwendung von magnetischen Sensoren vorteilhaft ist, da anderweitige Sensoren, wie optische oder mechanische Sensoren, durch den Schmutz beeinträchtigt werden können.

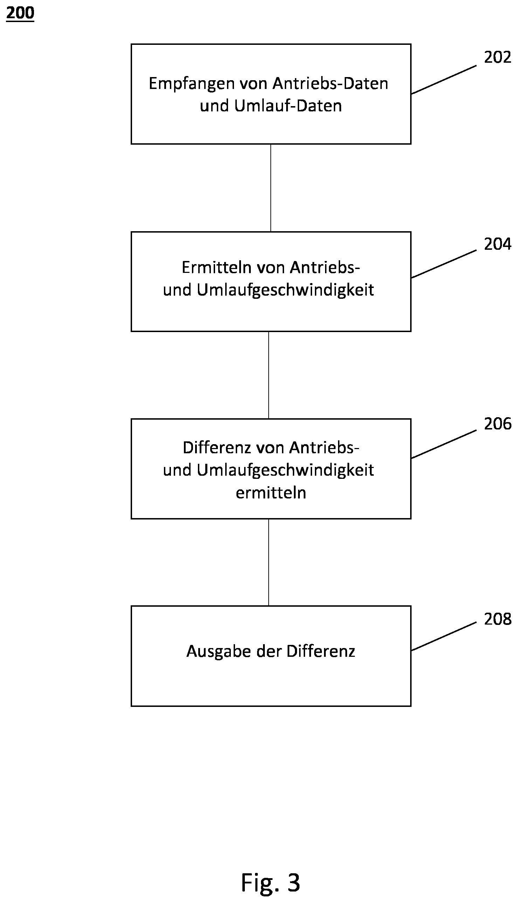

Figur 3 zeigt ein Ablaufdiagramm eines Verfahrens 200 gemäß einer Ausführungsform der vorliegenden Erfindung. Beispielsweise kann die Steuervorrichtung 110 gemäß Figur 1 dazu ausgebildet sein das in Figur 3 dargestellte Verfahren durchzuführen.

In einem ersten Schritt 202 empfängt die Steuervorrichtung 110 Antriebs-Daten und Umlauf-Daten.

Bei den Antriebs-Daten handelt es sich um jegliche Daten, welche repräsentativ für eine Antriebsgeschwindigkeit des Seilantrieb 102 sind. Beispielsweise kann es sich bei den Antriebs-Daten um eine Drehzahl der erste und zweiten Antriebsräder 102a 102b handeln. Derartige Drehzahlen können auf unterschiedliche Art und Weise durch entsprechende Sensorvorrichtungen erfasst werden. Beispielsweise kann es sich bei dem Sensor um einen optischen oder magnetischen Sensor handeln, welcher die Drehzahl bei Betrieb der Antriebsräder 102a, 102b kontaktlos erkennt. Die Drehzahl der Antriebsräder 102a, 102b kann alternativ auch durch die Abfrage eines Drehzahl-Sollwerts der Motorsteuerung.

Bei den Antriebs-Daten kann es sich jedoch auch direkt um eine Antriebsgeschwindigkeit der Antriebsräder 102a, 102b handeln. Die Antriebsgeschwindigkeit, d.h. die Bahngeschwindigkeit der Antriebsräder 102a, 102b, kann ebenfalls durch einen geeigneten Sensor erfasst und an die Steuervorrichtung übertragen werden.

In einem weiteren Beispiel kann die Strom-Frequenz des Motorsteuersignals als Antriebs-Daten verwendet werden. Auch Strom-Frequenz des Motorsteuersignals ist ein Maß für die Antriebsgeschwindigkeit der Antriebsräder 102a, 102b.

Bei den Umlauf-Daten handelt es sich um jegliche Daten, welche repräsentativ für eine Umlaufgeschwindigkeit des Sägeseils 104 sind. Es sei an dieser Stelle jedoch erwähnt, dass die Umlauf-Daten unabhängig von den Antriebs-Daten (bspw. der Drehzahl oder Antriebsgeschwindigkeit Antriebsräder) erfasst werden.

Erfindungsgemäß ist eine separate, zweite Sensorvorrichtung vorgesehen sein, welche die Umlauf-Daten unabhängig von den Antriebs-Daten erfasst. Bei den Umlauf-Daten kann es sich beispielsweise um Positions-, Geschwindigkeit- bzw. Beschleunigungswerte des Sägeseils handeln. Beispielsweise kann die Geschwindigkeit des Sägeseils mit optischen, magnetischen oder auf dem Prinzip von Radar arbeitenden Sensoren erfasst werden.

In einem zweiten Schritt 204 ermittelt die Steuervorrichtung 110 die Antriebsgeschwindigkeit (d.h. die Bahngeschwindigkeit) wenigstens eines der beiden Antriebsräder 102a, 102b auf Grundlage der Antriebs-Daten. Soll ich dich bei den Antriebsdaten um die Drehzahl eines oder beide Antriebsräder 102a, 102b handeln, so ist die Steuervorrichtung dazu ausgebildet die Drehzahl der Antriebsräder 102a, 102b mit dem Radius der Antriebsräder 102a, 102b zu multiplizieren, um die Antriebsgeschwindigkeit zu ermitteln. Mit anderen Worten, die Steuervorrichtung 110 bestimmt die Bahngeschwindigkeit, das heißt die Antriebsgeschwindigkeit am Außenradius der Antriebsräder 102a, 102b.

Im zweiten Schritt 204 ermittelt die Steuervorrichtung 110 auch die Umlaufgeschwindigkeit des Sägeseils 104 auf Grundlage der Umlauf-Daten. Bei der Umlaufgeschwindigkeit handelt es sich insbesondere um die Geschwindigkeit, mit welcher sich das Sägeseil bewegt. Diese ist insbesondere an jeder Stelle des Sägeseils 104 konstant und kann somit innerhalb und außerhalb der Seilsäge 100 erfasst werden.

In einem dritten Schritt 206 ermittelt die Steuervorrichtung 110 eine Differenz zwischen Antriebs- und Umlaufgeschwindigkeit. Zur Ermittlung der Differenz kann die Steuervorrichtung 110 beispielsweise dazu ausgebildet sein die Umlaufgeschwindigkeit von der Antriebsgeschwindigkeit abzuziehen.

An dieser Stelle sei erwähnt, dass es grundlegend wünschenswert ist, wenn die Seilsäge derart konfiguriert ist, dass keine Differenz zwischen der Antriebs- und der Umlaufgeschwindigkeit besteht. Auch sei erwähnt, dass die Umlaufgeschwindigkeit maximal der Antriebsgeschwindigkeit entspricht. Eine Umlaufgeschwindigkeit, welche höher als die Antriebsgeschwindigkeit ist, und damit eine negative Differenz, ist nicht zu erwarten. Dagegen ist vor allem bei nicht fachgerechter Einstellung der Seilsäge 100 die Antriebsgeschwindigkeit häufig höher als die Umlaufgeschwindigkeit. Dies ist insbesondere dann der Fall, wenn das Sägeseil durchrutscht, das heißt ein Schlupf an der Kontaktfläche zwischen den Antriebsrädern 102a, 102b und dem Sägeseil 104 entsteht.

In einem Schritt 208 gibt die Steuervorrichtung 110 die Differenz aus. Beispielsweise kann die Steuervorrichtung die Differenz über eine Anzeigevorrichtung (bspw. Bildschirm) der Seilsäge 100 an den Benutzer ausgeben. Die Differenz kann durch die Steuervorrichtung 110 als absoluter Wert, bspw. in m/s, ausgegeben werden. Der Benutzer kann somit anhand der Differenz abschätzen wie stark das Sägeseil rutscht, das heißt wie hoch der Schlupf des Sägeseils ist.

Alternativ oder zusätzlich kann die Steuervorrichtung 110 dazu ausgebildet sein auf Grundlage der Differenz ein Warn-Signal an den Benutzer auszugeben. Hierzu kann die Steuervorrichtung ausgebildet sein die Differenz mit einem Warn-Grenzwert zu vergleichen. Sobald die Differenz den Wam-Grenzwert überschreitet, gibt die Steuervorrichtung 110 ein Warn-Signal, beispielsweise in Form eines akustischen Signals, an den Benutzer aus. Dies hat den Vorteil, dass der Benutzer die Differenz nicht zu jeder Zeit im Auge behalten muss. Vielmehr wird dieser durch Steuervorrichtung 110 automatisch gewarnt, wenn ein zu hoher Schlupf besteht, wodurch die Standzeiten der Seilsäge, insbesondere der Antriebsräder verringert wird.

Alternativ oder zusätzlich kann die Steuervorrichtung 110 einen Schlupffaktor auf Grundlage der Differenz ermitteln. Die Steuervorrichtung 110 kann hierzu auf eine Datenbank zugreifen, in welcher unterschiedliche Schlupffaktoren mit entsprechenden Differenzen/Differenzbereichen zwischen der Antriebsgeschwindigkeit und der Umlaufgeschwindigkeit verknüpft sind. Hierdurch muss der Benutzer den absoluten Wert der Differenz nicht einzuschätzen wissen. Vielmehr dienen die Schlupffaktoren als unterschiedliche Warnstufen, welche den Benutzer darüber informieren, wie stark die Antriebsräder mit den derzeitigen Einstellungen der Seilsäge abgenutzt werden.

Alternativ oder zusätzlich zu Schritt 208, kann die Steuervorrichtung 110 eine automatische Notabschaltung der Seilsäge veranlassen. Die Steuervorrichtung 110 kann dies insbesondere dann veranlassen, wenn die Differenz zwischen Antriebsgeschwindigkeit und Umlaufgeschwindigkeit einen Notfall-Grenzwert überschreitet. Hierzu ist die Steuervorrichtung 110 dazu ausgebildet die Differenz mit dem Notfall-Grenzwert zu vergleichen. Gleichzeitig kann die Steuervorrichtung 110 bei Überschreitung des Notfall-Grenzwerts den Benutzer darüber informieren, dass ein zu hoher Schlupf erfasst wurde. Auch kann die Steuervorrichtung 110 dazu ausgebildet sein, Instruktionen zur Behebung der Differenz, das heißt zur Einstellung der Seilsäge auszugeben. Die Instruktionen können beispielsweise Anweisungen zur Einstellung des Spannmechanismus enthalten, um die Reibungskräfte zwischen den Antriebsrädern und dem Sägeseil zu erhöhen bzw. die Reibungskräfte des Sägeseils im Bauteil zu verringern (z.B. abrunden von scharfen Kanten im Bauteil) und somit die Differenz der Geschwindigkeiten zu verringern beziehungsweise zu beheben.

Die Steuervorrichtung 110 kann auch über einen Kommunikationskanal (nicht dargestellt) mit dem Spannmechanismus 106 der Seilsäge verbunden sein. Über diesen Kommunikationskanal kann die Steuervorrichtung einerseits den Spannmechanismus steuern, das heißt die Spannung bzw. den Druck des Spannmechanismus einstellen, und andererseits Rückmeldung über die derzeitige Spannung beziehungsweise den derzeitigen Druck des Spannmechanismus empfangen. Der Spannmechanismus 106 kann hierzu mit einem entsprechenden Sensor (z.B. Drucksensor) versehen sein.

der Differenz zwischen der Antriebsgeschwindigkeit und der Umlaufgeschwindigkeit. In einer weiteren Ausführungsform kann die Steuervorrichtung 110 einem Durchrutschen des Sägeseils automatisch entgegenwirken. Die Steuervorrichtung 110 kann dazu ausgebildet sein die Seilspannung zu erhöhen, sobald die Differenz der Geschwindigkeiten grösser 0 bzw. größer als ein Schlupf-Grenzwert ist. Wie bereits erwähnt kann durch die Erhöhung der Seilspannung der Kontakt zwischen den Antriebsrädern und dem Sägeseil verbessert werden. Hierdurch kann in der Regel der Schlupf zwischen den Antriebsrädern und dem Sägeseil verringert beziehungsweise behoben werden. Die Steuervorrichtung 110 kann dazu ausgebildet sein die Seilspannung über den Spannmechanismus so lange zu erhöhen, bis die Differenz der Geschwindigkeiten den Wert 0 erreicht. Mit anderen Worten, die Steuervorrichtung 110 regelt die Seilspannung auf Grundlage der Differenz zwischen der Antriebsgeschwindigkeit und der Umlaufgeschwindigkeit.

Nach einer weiteren Ausführungsform kann die Steuervorrichtung auch dazu ausgebildet sein, Betriebsparameter des Seilantriebs auf Grundlage der Differenz zwischen der Antriebsgeschwindigkeit und der Umlaufgeschwindigkeit zu verändern. Beispielsweise kann die Steuervorrichtung dazu ausgebildet sein, dass Drehmoment und/oder die Drehzahl zu verringern, wenn die Differenz der Geschwindigkeiten größer als der Schlupf-Grenzwert ist.

In manchen Fällen ist das Sägeseil 104 derart blockiert/verhakt, dass der Schlupf zwischen dem Sägeseil und den Antriebsrädern auch durch eine Erhöhung der Seilspannung nicht behoben werden kann. Tatsächlich kann in einem solchen Fall die zunehmende Erhöhung der Seilspannung unter Umständen zum Reißen des Sägeseil führen. Dementsprechend kann die Steuervorrichtung 110 dazu ausgebildet sein, die Seilspannung während der oben erwähnten Regelung zu überwachen. Mit anderen Worten, die Steuervorrichtung 110 kann dazu ausgebildet sein die Seilspannung mit einem Spannkraft-Grenzwert zu vergleichen. Sollte durch die automatische Einstellung der Seilspannung auf Grundlage der Differenz die Spannkraft des Säge Seils derart ansteigen, das der Spannkraft-Grenzwert überschritten wird, so unterbindet die Steuervorrichtung 110 eine weitere Anhebung der Seilspannung durch den Spannmechanismus 106. Gleichzeitig kann die Steuervorrichtung 110 Anweisungen an den Benutzer ausgeben, die Führung des Sägeseils zu kontrollieren. Beispielsweise kann es vor Beginn des Sägevorgangs notwendig sein, die Eingangs- und Ausgangsöffnungen der Bohrungen 122, 124 abzurunden, um den Widerstand gegen die Bewegung des Sägeseils zu verringern und somit ein Anlaufen des Sägeseils zu ermöglichen.

### Bezugszeichenliste

- 100: Seilsäge
- 102: Seilantrieb
- 102a, 102b: Antriebsrad
- 103: Seilspeicher
- 103a, 103b: Rollensatz
- 104: Sägeseil
- 106: Spannmechanismus
- 108: Gehäuse
- 110: Steuervorrichtung
- 112: Wand
- 114, 116: Führungsrolle
- 118, 120: Seilführung
- 122, 124: Bohrung
- 130: erste Sensorvorrichtung
- 132: zweite Sensorvorrichtung

## Patentansprüche

1. Seilsäge (100), welche folgendes aufweist:
- einen Seilantrieb (102) zum Antrieb eines Sägeseils (104);
- eine erste Sensorvorrichtung (130) zur Erkennung von Antriebs-Daten, welche repräsentativ für die Antriebsgeschwindigkeit des Seilantriebs sind;
- eine zweite Sensorvorrichtung (132) zur Erkennung von Umlauf-Daten, welche repräsentativ für die Umlaufgeschwindigkeit des Sägeseils (104) sind;
- eine Steuervorrichtung (110), welche ausgebildet ist zum:
- Empfangen der Antriebs-Daten und der Umlauf-Daten;
- Ermitteln einer Antriebsgeschwindigkeit des Seilantriebs auf Grundlage der Antriebs-Daten und Ermitteln einer Umlaufgeschwindigkeit des Sägeseils (104) auf Grundlage der Umlauf-Daten;
- Ermitteln einer Differenz aus Antriebsgeschwindigkeit und Umlaufgeschwindigkeit;
- Ausgabe der Differenz an den Benutzer der Seilsäge und/oder Steuerung der Seilsäge auf Grundlage der Differenz.

2. Seilsäge (100) nach Anspruch 1,
wobei die Steuervorrichtung (110) dazu ausgebildet ist, ein Warnsignal zu erzeugen, wenn die Differenz einen Schlupf-Grenzwert überschreitet.

3. Seilsäge (100) nach Anspruch 1 oder 2,
wobei die Steuervorrichtung (110) dazu ausgebildet ist, den Seilantrieb (102) zu deaktivieren, wenn die Differenz einen Notfall-Grenzwert überschreitet.

4. Seilsäge (100) nach einem der Ansprüche 1 bis 3,
wobei die erste Sensorvorrichtung (130) und/oder die zweite Sensorvorrichtung (132) einen magnetischen, optischen, mechanischen oder radarbasierten Sensor zur Erfassung der Antriebs-Daten und/oder Umlauf-Daten aufweist.

5. Seilsäge (100) nach einem der Ansprüche 1 bis 4,
wobei der Seilantrieb (102) wenigstens ein Antriebsrad (102a, 102b) aufweist und wobei die Antriebs-Daten eine Drehzahl des wenigstens einen Antriebsrads (102a, 102b) umfassen.

6. Seilsäge (100) nach einem der Ansprüche 1 bis 4,
wobei der Seilantrieb (102) wenigstens einen Antriebsmotor aufweist und wobei die Antriebs-Daten einen Drehzahl-Sollwert zur Steuerung des Antriebsmotors umfasst.

7. Seilsäge (100) nach einem der Ansprüche 1 bis 6,
wobei die Seilsäge einen Spannmechanismus (106) zum Spannen eines Sägeseils (104) aufweist, und wobei die Steuervorrichtung (110) dazu ausgebildet ist, eine auf das Sägeseil (104) ausgeübte Spannkraft auf Grundlage der Differenz zu verändern.

8. Seilsäge (100) nach einem der Ansprüche 1 bis 6,
wobei die Seilsäge einen Spannmechanismus (106) zum Spannen eines Sägeseils (104) aufweist, und wobei die Steuervorrichtung (110) dazu ausgebildet ist, ein auf das das Sägeseil (104) ausgeübtes Drehmoment auf Grundlage der Differenz zu verändern.

9. Seilsäge (100) nach Anspruch 8,
wobei die Steuervorrichtung (110) dazu ausgebildet ist, die auf das Sägeseil (104) ausgeübte Spannkraft zu erhöhen, wenn die Antriebsgeschwindigkeit höher ist als die Umlaufgeschwindigkeit.

10. Seilsäge (100) nach Anspruch 9,
wobei die Steuervorrichtung (110) dazu ausgebildet ist, die auf das Sägeseil (104) ausgeübte Spannkraft so lange zu erhöhen, bis die Differenz im Wesentlichen Null ist.

11. Seilsäge (100) nach einem der Ansprüche 1 bis 10,
wobei die Seilsäge (100) einen Sensor zur Erfassung von Spannkraft-Daten, welche repräsentativ für eine auf das Sägeseil (104) ausgeübte Spannkraft sind, aufweist, wobei die Steuervorrichtung (110) dazu ausgebildet ist die Spannkraft-Daten zu empfangen und eine auf das Sägeseil (104) ausgeübte Spannkraft zu ermitteln, wobei die Steuervorrichtung (110) dazu ausgebildet ist, die ermittelte Spannkraft mit einem Spannkraft-Grenzwert zu vergleichen und ein weiteres Spannen des Sägeseils (104) zu verhindern oder den Benutzer zu informieren, wenn die ermittelte Spannkraft den Spannkraft-Grenzwert überschreitet.

12. Seilsäge (100) nach einem der Ansprüche 1 bis 11,
wobei die Seilsäge einen Bildschirm zur Anzeige der Differenz aufweist.

13. Seilsäge (100) nach einem der Ansprüche 1 bis 12,
wobei die Seilsäge ein Sägeseil (104) aufweist, welches ein mit einem super-abrasiven Schneidbelag, insbesondere Diamant, belegtes Stahlkabel umfasst.

14. Verfahren zum Betrieb einer Seilsäge, wobei das Verfahren folgende Schritte aufweist:
- Empfangen von Antriebs-Daten, welche repräsentativ für die Antriebsgeschwindigkeit des Seilantriebs sind, und Umlauf-Daten, welche repräsentativ für die Umlaufgeschwindigkeit des Sägeseils sind;
- Ermitteln einer Antriebsgeschwindigkeit des Seilantriebs auf Grundlage der Antriebs-Daten und Ermitteln einer Umlaufgeschwindigkeit des Sägeseils auf Grundlage der Umlauf-Daten;
- Ermitteln einer Differenz aus Antriebsgeschwindigkeit und Umlaufgeschwindigkeit;
- Ausgabe der Differenz an den Benutzer der Seilsäge und/oder Steuerung der Seilsäge auf Grundlage der Differenz.
